# EUROPÄISCHE PATENTANMELDUNG

(11) **EP 0 755 778 A1**
(43) Veröffentlichungstag der Anmeldung: **29.01.1997**
(21) Anmeldenummer: 96111413.9
(22) Anmeldetag: 16.07.1996
(51) Int. Cl.: B32B 27/08

(54) **Sterilisationsfeste Sperrschichtfolie auf Basis von Polyamiden und Polyolefinen**

(30) Priorität: 28.07.1995 DE 19527491
(71) Anmelder: WOLFF WALSRODE AG, D-29655 Walsrode (DE)
(72) Erfinder: Gasse, Andreas Siegmar, Dr., 29664 Walsrode (DE); Klein, Rudi, 29664 Walsrode (DE)
(74) Vertreter: Braun, Rolf, Dr.

(57) **Zusammenfassung**

Die vorliegende Erfindung betrifft sterilisationsfeste Sperrschichtfolien auf Basis von Polyamiden und Polyolefinen, wobei die Folie
- mindestens einer Schicht aus aliphatischem Polyamid (A) und
- mindestens einer Schicht aus einem Polymerblend (B), welches aus 50 - 85 Gew.-% Polyarylamid und 15 - 85 Gew.-% aliphatischem Polyamid und
- mindestens einer thermoplastischen Siegelschicht (C) aus einem Polyolefin mit einem Kristallitschmelzpunkt von 121°C oder größer (C1) oder aus einem Polymerblend, enthaltend mindestens ein Polyolefin mit einem Kristallitschmelzpunkt von 121°C oder größer (C2) und
- mindestens einer Verbindungsschicht (D)
besteht, so angeordnet, daß eine Siegelschicht und eine Schicht aus aliphatischem Polyamid auf den Außenseiten der Folie liegen und daß die Folie ungereckt ist.

## Beschreibung

Die vorliegende Erfindung betrifft eine mehrschichtige Tiefziehfolie auf Basis von Polyamiden und Polyolefinen, die sich dadurch auszeichnet, daß sie sterilisationsfest ist, nach dem Sterilisieren nicht eintrübt und eine gute Gasbarriere auch bei hoher relativer Feuchte aufweist. Anwendung findet eine solche Folie insbesondere in der Verpackung von Lebensmitteln.

Für die Sterilisation von Folien bzw. Füllgut in Verpackungsfolien sind unterschiedliche Verfahren bekannt. Man unterscheidet die Gassterilisation (üblicherweise mit Ethylenoxid), die Sterilisation mit Gammastrahlen und die Heißdampfsterilisation. Diese werden üblicherweise in Autoklaven durchgeführt. Die Sterilisation wird bei Temperaturen über 100°C durchgeführt, wobei das zu sterilisierende Material 30 Minuten dieser Temperatur ausgesetzt wird. Die am häufigsten angewendete Temperatur ist 121°C im Gegendruckautoklaven. Im weiteren soll der Stand der Technik im Bereich "Folien für die Heißdampfsterilisation" beschrieben werden.

Folien, die siegelbar sind müssen mindestens zweischichtig sein, wobei eine Schicht als Trägerschicht und eine als Siegelschicht dient. Ist die Trägerschicht Aluminium, Papier oder eine gereckte Folie, so kann diese zwar sterilisationsfest aber nicht tiefziehbar sein. Beispiele hierfür sind in EP 474 587, JP 56082 247, JP 05031867, DE 3623 568 und EP 21 578 beschrieben.

Diese Folien haben den Nachteil, daß sie aufgrund des Reckens - in der Regel wird z.B. aus Festigkeits- und/oder Kostengründen eine technisch maximale, biaxiale oder monoaxiale Verstreckung angestrebt - nicht mehr tiefziehbar und damit gründsätzlich für die gewünschten Anwendungen unbrauchbar sind.

Als grundsätzlich tiefziehbare Trägermaterialien sind ungereckte Polymerschichten wie Polycarbonat (NL 7214460), Polystyrol (BE 877 054), Polypropylen (CA 1150 461, J5 4032 584), Polybutylenterephthalat (JP 06226930) u.s.w. geeignet.

Kombinationen aus Polyamid und Polyolefinen sind traditionell charakteristisch für flexible Tiefziehfolien, die zur Verpackung von Lebensmitteln eingesetzt werden. Dazu verwendet man üblicherweise Polyamid als Trägermaterial und Polyolefine als Siegelschichtmaterial (z.B. GB 2 023 088). Traditionell wird in Tiefziehfolien als Polyamidtype überwiegend Polyamid 6 eingesetzt. Polyamid6 hat den Nachteil einer häufig nicht ausreichenden Sauerstoffbarriere.

Abweichend von der Verwendung des reinen Polyamid 6, findet man auch den Einsatz von Polyamidblends aus amorphen und aliphatischen Polyamiden in der Patentliteratur, z.B. bei den gereckten Folien (EP 0 065 278, FR 2 348 805, US 4 800 129). Diese Folien haben ebenfalls den Nachteil, daß sie aufgrund des Reckens - in der Regel wird z.B. aus Festigkeits- und/oder Kostengründen eine technisch maximale, biaxiale oder monoaxiale Verstreckung angestrebt - nicht mehr tiefziehbar sind.

Ferner wird der Einsatz von Polyamidblends enthaltend aliphatisches und amorphes Polyamid auch in tiefziehbaren Folien beschrieben. In der Patentliteratur findet man Folien, die mit einer einzigen solchen Polyamidblend-Schicht auskommen (EP 0 408 390, AU 8 825 700, EP 0 358 038, JP 1 006 056, DE 2 309 420). Solche Folien sind dadurch gekennzeichnet, daß sie zwar besser verstreckbar sind (z.B. EP 0 408 390, Beispiel III, Tabelle3), als Polyamid6-Folien (Polyamid6 ist deutlich stärker kristallisiert ist als ein Polymerblend enthaltend amorphes Polyamid), jedoch deutlich höhere Reibkoeffizienten aufweisen (Jacobi, H.R., Kunststoffe 47 (1957), S.129; Vieweg R., Müller A., Kunststoffhandbuch Bd. IV, C. Hanser Verl. München 1966, S.540) und damit schlecht gleitfähig sind. Einschichtige Folien sind nicht siegelbar.

Darüber hinaus sind aus der Patentliteratur Folien bekannt, die mit zwei Schichten auskommen, wobei eine Schicht aus einem Polyamidblend enthaltend aliphatisches und amorphes Polyamid und eine weitere aus siegelbarem Material besteht (EP 0 526 814, JP 60 097 850, EP 0 287 839, EP 0 104 436). Diese Folien haben gegenüber den einschichtigen Folien zwar den Vorteil, daß sie siegelbar sind, das Problem der schlechten Gleitfähigkeit besteht aber weiterhin und die Sterilisierbarkeit ist im allgemeinen nicht gegeben.

Zur Erzielung einer gegenüber Polyamid-6 oder anderen aliphatischen Polyamiden höheren Gasdichtigkeit ist das Blenden mit EVOH (EP 380123A, EP 62822, EP 467688A, EP 466521A, EP 305146A) und die ausschließliche Verwendung von EVOH bekannt. Der Nachteil solcher Folien ist das starke Eintrüben durch die Sterilisation und der Verlust der zuvor guten Sauerstoffbarriere durch die Sterilisation.

Ein großer Teil der sterilisationsfesten Folien ist mittels Kaschierkleber herzustellen (DE 3545 768, EP 474 587, JP 03254939, EP 26 954, EP 21 578, DT 2829 871, BE 877 054, J5 1124 180, NL 7214460, EP 50 255, EP 225 164). Alternative Fertigungskonzepte (z.B. Coextrusion) sind nicht explizit erwähnt worden.

Als Siegelschichtmaterial in sterilisationsfesten Folien wird bevorzugt Polyproylen, Polypropylencopolymere oder Polymerblends, enthaltend Polyproylenbasierende Polymere, eingesetzt (JP 03254 939, JP 03126 557, EP 0629227, JP 63270 140, EP 288 972, DE 3545 768, DE 3431 364, DE 3315 652, EP 21548, JP 54032 584, JP 51124 180, NL 72114460). Solche Materialien gewährleisten zwar aufgrund ihrer hohen Kristallitschmelzpunkte die Sterilisationsfestigkeit, sind aber aus gleichem Grunde auch nur bei sehr hohen Siegeltemperaturen versiegelbar. Alternative, sterilisationsfeste Siegelschichtmaterialien sind ebenfalls nicht erwänt worden.

Die Sterilisationsfestigkeit bis 121°C wurde explizit in den Patentschriften EP 0629227, EP 50 255, EP 21578 und NL 7214460 erwähnt. In allen Fällen handelt es sich dabei um Polypropylen- oder Polypropylencopolymersiegelschichten. Weiterhin sind auch Polyethylene erwähnt, wobei aber niedrigere Sterilisationstemperaturen angegeben werden (z.B. JP 56082247: < 100°C).

Zusammenfassend kann festgestellt werden, daß die Forderungen tiefziehbar, siegelbar, gleitfähig, sterilisierbar, transparent und gasdicht nicht gleichzeitig erfüllbar sind. Insbesondere die letzten drei Forderungen bedeuten, daß nach der Patentliteratur eine Folie entweder gasdicht ist (Basis EVOH), dann aber durch Sterilisation eintrübt, oder durch Sterilisation nicht eintrübt (Basis PA6), aber nur eine durchschnittliche Gasbarriere aufweist.

Es stellt sich daher die Aufgabe, eine Folie auf Basis von Polyamid und Polyolefinen bereitzustellen, die die Eigenschaften
- gute Tiefziehbarkeit,
- Siegelbarkeit,
- Sterlisierbarkeit,
- hohe Gasdichtigkeit (im trockenen Zustand und bei hoher relativer Feuchte),
- hohe Transparenz vor und nach der Sterilisation und
- gute Gleitfähigkeit
gleichzeitig aufweist.

Überraschenderweise gelang dies durch eine sterilisationsfeste Sperrschichtfolie auf Basis von Polyamiden und Polyolefinen, die dadurch gekennzeichnet ist, daß die Folie aus
- mindestens einer Schicht aus aliphatischem Polyamid (A) und
- mindestens einer Schicht aus einem Polymerblend (B), welches aus 50-85 Gew-% aus Polyarylamid und 15-50 Gew-% aliphatischem Polyamid und
- mindestens einer thermoplastischen Siegelschicht (C) aus einem Polyolefin mit einem Kristallitschmelzpunkt von 121°C oder größer (C1) oder aus einem Polymerblend, enthaltend mindestens ein Polyolefin mit einem Kristallitschmelzpunkt von 121°C oder größer (C2) und
- mindestens einer Verbindungsschicht (D)
besteht, die so angeordnet sind, daß eine Siegelschicht und eine Schicht aus aliphatischem Polyamid auf den Außenseiten der Folie liegen. Die Folie muß ungereckt sein.

Das aliphatische Polyamid besteht aus den Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, oder aus einer Mischung der genannten Polyamide.

Das Polyarylamid ist ein Polykondensat aus aromatischen Diaminen und Dicarbonäuren, vorzugsweise ein solches, das durch Polykondensation von m-Xylylendiamin und Adipinsäure hergestellt wurde.

Die thermoplastische Siegelschicht besteht aus einem Polymer aus der Gruppe der Polyethylene, Copolymere der Polyethylene, Polypropylene, Copolymere der Polypropylene oder Polybutylene oder einem Blend, enthaltend mindestens ein in diesem Abschnitt genanntes Polymer. Dieses Blend ist vorzugsweise ein Polymerblend aus einem LinearLowDensityPolyethylen (LLDPE) und einem LowDensityPolyethylen (LDPE) oder ein Polymerblend aus einem Ethylen/Propylen-Copolymer und einem LinearLowDensityPolyethylen (LLDPE).

Die Verbindungschichten bestehen aus einem Klebstoffsystem und/oder einem polymeren Haftvermittler. Das Klebstoffsystem ist ein 2-Komponenten Polyurethan-Klebstoffsystem. Der polymere Haftvermittler ist ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend, enthaltend mindestens einen der genannten Haftvermittler. Vorzugsweise ist der Haftvermittler ein anhydridmodifiziertes Polyethylen oder Polypropylen-Copolymer.

Mindestens eine Schicht kann mit Gleit- und/oder Antiblockmittel ausgerüstet sein, wobei das Gleitmittel vorzugsweise ein Amidwachs und das Antiblockmittel ein modifiziertes natürliches Kieselsäureprodukt ist. Besonders interssant ist die Ausrüstung der Siegelschicht und/oder die Schicht aus aliphatischem Polyamid mit Gleit- und Antiblockmittel.

Bevorzugte Folienaufbauten sind:
- A / D / B / D / C,
- A / B / A / D / C oder
- A / EVOH / B / D / C, wobei EVOH ein Ethylen/Vinylalkohol-Copolymeres ist.

Zwischen den Schichten D und C können gegebenenfalls Zwischenschichten angeordnet werden, welche eine gute Verbundhaftung zu D und C haben und z.B. identisch mit C sein können.

Die Gesamtdicke der Folie beträgt 15 bis 400 µm, vorzugsweise 50 bis 330 µm.

Die Folie ist für die Bedruckung geeignet. Es kann mindestens eine Schicht eingefärbt oder bedruckt sein.

Die Folie ist besonders für Verpackungsanwendungen, besonders für die Verpackung von Lebensmitteln geeignet. Die Folie ist geeignet für die Verpackung von Fleisch- und Wurstprodukten, Milchprodukten, Fisch- und Räucherwaren, Fertiggerichten, Brot- und Backwaren und medizinisch-technischen Geräten.

Überraschenderweise ist es durch die erfindungsgemäße Zusammensetztung der Folie gelungen, die Forderung nach guter Tiefziehbarkeit, Siegelbarkeit, guter Gleitfähigkeit, Sterilisierbarkeit, hoher Gasdichtigkeit bei geringer und hoher relativer Feuchte und guter Transparenz vor und nach der Sterilisation gleichzeitig zu erfüllen. Nach dem Stand der Technik ist bekannt, daß durch Polymerschichten aus EVOH und MXD6 gute Gasdichtigkeiten erzielt werden können. Sterilisiert man diese, kommt es aber zu einer Trübung der entsprechenden Schicht. Mischt man dem EVOH als Mischungskomponente aliphatisches Polyamid zu, ist die Trübung nach der Sterilisation nicht zuverhindern. Überraschenderweise ergibt aber ein Polymerblend aus MXD6 und aliphatischen Polyamid eine sauerstoffdichte Schicht, die durch Sterilisation nicht eintrübt und in Kombination mit den übrigen beanspruchten Schichten das beschriebene Anforderungsprofil erfüllt.

Für die Herstellung der Folie kommen Coextrusion (Blasfolie oder Flachfilm) oder auch die Einzelfertigung der Schichten A, B und C in Frage, die dann anschließend miteinander kaschiert (Schicht D) werden. Auch kombinierte Verfahren sind denkbar.

Es kommen bekannte, nach dem Stand der Technik übliche Anlagenkonzepte zur Anwendung, wobei im Fall der Blasfoliencoextrusion der Fertigungsvorgang dadurch gekennzeichnet ist, daß die Schmelze zum Schlauch geformt wird, welcher aufgeblasen, gekühlt und am anderen nun kalt gewordenem Ende von Quetschwalzen flachgelegt und geschlossen gehalten wird und anschließend die Folie aufgewickelt wird. Im Fall der Flachfoliencoextrusion werden sogenannte Chill-Roll-Anlagen eingesetzt, die als besonderes Merkmal große Kühlwalzen aufweisen, die den aus dem Werkzeug austretenden Schmelzefilm aufnehmen. Die hier zu verwendenden Anlagen unterscheiden sich grundsätzlich von sogenannten Reckanlagen, die hier nicht verwendet werden können, da sie immer ein gerecktes Produkt erzeugen.

Als kombinierte Verfahren sind besonders wirtschaftlich:
- Flachfilmcoextrusion eines Trägers mit dem Aufbau A / D / B / D und anschließende Extrusions- bzw. Coextrusionsbeschichtung der Schicht C auf D, gegebenenfalls mit Zwischenschicht(en) zwischen D und C.
- Flachfilmcoextrusion des Trägers A / EVOH / B, Auftrag eines Klebers D und anschließende Kaschierung einer zuvor als Blasfolie hergestellten Siegelschicht C auf D, gegebenenfalls mit Zwischenschicht(en) zwischen D und C.
- Flachfilmcoextrusion des Trägers A / B / A, Auftrag eines Klebers D und anschließende Kaschierung einer zuvor als Blasfolie hergestellten Siegelschicht C auf D, gegebenenfalls mit Zwischenschicht(en) zwischen D und C.

Als ein Merkmal zur Beurteilung der Erfindung wurde die Tiefziehbarkeit herangezogen. Zur Ermittlung der Tiefziehbarkeit wurden die zuvor gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittweise über eine Heizplatte erwärmt. Die Wärme kann dazu entweder von der Siegelseite oder auch der der Siegelseite abgewandten Seite der Folie erfolgen. Die mit Heizplattentemperaturen von 95°C vorgewärmten Folien wurden anschließend durch Anlegen eines Vakuums in eine Mulde mit dem Rahmenmaß 185 x 115 mm gezogen. Die Ziehtiefe betrug 60 mm.

Die Siegelbarkeit wurde an der Siegelstation der o.g. Maschinen getestet, wo die zuvor tiefgezogenen Mulden mit einer Deckelfolie gleicher Zusammensezung durch Temperatur (140°C) und Druck versiegelt wurden (Rahmen- und Flächenversiegelung).

Zur Beurteilung der Erfindung wurde ferner die Sauerstoffdurchlässigkeit herangezogen. Bestimmt wurde die Sauerstoffdurchlässigkeit nach dem Trägergasverfahren gemäß DIN 53 380, Teil 3. Die Sauerstoffdurchlässigkeit ist demnach das auf Normbedingungen (0°C, 760mmHg) umgerechnete Sauerstoffvolumen, das während eines Tages (d=24h) bei einer bestimmten Temperatur und Feuchtigkeit und einem Sauerstoffpartialdruck von 1 bar durch die zu prüfende Folie hindurchtritt (Dimension: Ncm³ / (m²*d*bar)).

Dazu wird die Folienprobe zwischen die beiden Teile einer Permeationskammer gasdicht eingespannt. Durch den einen Kammerteil strömt Sauerstoff (Meßgas), durch den anderen Kammerteil strömt Stickstoff (Trägergas), der den durch die Probe permeierten Sauerstoff in einen hochempfindlichen elektrochemischen Sensor transportiert. Dort wird ein der chemisch umgesetzten Menge proportionaler elektrischer Strom erzeugt und zur Anzeige gebracht. Durch die praktisch vollständige Umsetzung des Sauerstoffs wird dessen Absolutmenge unabhängig von der Strömungsgeschwindigkeit des Trägergases gemessen.

Ferner wurden aus den Musterfolien im Gegendruckautoklaven bei 121°C 30 Minuten sterilisiert. Die visuelle Bewertung der Transparenz nach der Sterilisation erfolgte in den Kategorien "ja" (kein Unterschied in der Transparenz vor und nach der Sterilisation erkennbar) und "nein" (Folie trübt infolge der Sterilisation ein).

### Beispiele und Vergleichsbeispiele

Der Gegenstand der Erfindung soll an Hand folgender Beispiele erklärt werden. Gereckte Folien wurden nicht untersucht, da dem Fachmann allgemein bekannt ist, daß diese nicht tiefziehbar sind.

### a. Vergleichsbeispiel 1:

Mehrschichtige ungereckte Folie des Typs A / B / A / D / C mit dem Aufbau
**PA6 / (MXD6) / PA6 / K / PE**
15 / 15 / 15 / - / 75 µm

Die fünfschichtige Folie wurde mit Hilfe eine 2-Komponenten-Polyurethan-Klebstoffsystems K kaschiert, wobei der dreischichtige Träger PA6 / (MXD6) / PA6 zuvor als Flachfilm coetrudiert und die Siegelschicht PE als Blasfolie hergestellt wurden. Die Gesamtdicke beträgt 120 µm. Als PA6 wurde Polyamid 6 der Dichte 1140 kg/m³ mit dem Kristallitschmelzpunkt 219°C und einer relativen Lösungsviscosität von 3,5 (PA-Konzentration 1%, Temperatur 25°C, gemessen in m-Kresol) eingesetzt. Das MXD6 ist ein Polykondensat aus Metaxylylendiamin und Adipinsäure mit einem Kristallitschmelzpunkt von 240°C, einer Glasübergangstemperatur von 75°C und einem Schmelzindex von 0,5 (ASTM D 1238, condition K). Das PE ist ein LLDPE der Dichte 935 kg/m³ einem Kristallitschmelzpunkt von 125°C und einem Schmelzindex (MFI 190/2,16) von 0,5 g/10min.

### b. Beispiel 1:

Mehrschichtige, ungereckte Folie des Typs A / B / A / D / C mit dem Aufbau
**PA6 / (80%MXD6+20%PA6) / PA6 / K / PE**
15 / 15 / 15 / - / 75 µm

Die fünfschichtige Folie wurde wie in Vergleichsbeispiel 1 (a) beschrieben hergestellt. Die mittlere Polyamidschicht besteht aus einem Polymerblend aus 80% MXD6 und 20% PA6. Die verwendeten Polymere sind identisch mit den in Vergleichsbeispiel 1 (a) beschriebenen.

### c. Beispiel 2:

Mehrschichtige, ungereckte Folie des Typs A / B / A / D / C mit dem Aufbau
**PA6 / (60%MXD6+40%PA6) / PA6 / K / PE**
15 / 15 / 15 / - / 75 µm

Die fünfschichtige Folie wurde wie in Vergleichsbeispiel 1 (a) beschrieben hergestellt. Die mittlere Polyamidschicht besteht aus einem Polymerblend aus 60% MXD6 und 40% PA6. Die verwendeten Polymere sind identisch mit den in Vergleichsbeispiel 1 (a) beschriebenen.

### d. Vergleichsbeispiel 2:

Mehrschichtige, ungereckte Folie des Typs A / B / A / D / C mit dem Aufbau
**PA6 / (aPA) / PA6 / K / PE**
15 / 15 / 15 / - / 75 µm

Die fünfschichtige Folie wurde wie in Vergleichsbeispiel 1 (a) beschrieben hergestellt. Die mittlere Polyamidschicht besteht aus einem amorphes Polyamid auf Basis von Isophthalsäure und Terephthalsäure der Dichte 1190 kg/m³ und der Glasübergangstemperatur 127°C. Die verwendeten Polymere PA6 und PE sowie das Klebstoffsystem K sind identisch mit den in Vergleichsbeispiel 1 (a) beschriebenen.

### e. Vergleichsbeispiel 3:

Mehrschichtige, ungereckte Folie des Typs A / B / A / D / C mit dem Aufbau
**PA6 / (PA6) / PA6 / K / PE**
15 / 15 / 15 / - / 75 µm

Die fünfschichtige Folie wurde wie in Vergleichsbeispiel 1 (a) beschrieben hergestellt. Die mittlere Polyamidschicht besteht wie auch die Nachbarschichten aus einem Polyamid6. K und PE sind identisch mit den in Vergleichsbeispiel 1 (a) beschriebenen.

### f. Vergleichsbeispiel 4:

Mehrschichtige, ungereckte Folie des Typs A / B / A / D / C mit dem Aufbau
**PA6 / (EVOH) / PA6 / K / PE**
15 / 15 / 15 / - / 75 µm

Die fünfschichtige Folie wurde wie in Vergleichsbeispiel 1 (a) beschrieben hergestellt. Die Schicht zwischen den PA6-Schichten besteht aus einem Ethylenvinylalkohol EVOH mit einem Ethylengehalt von 32%, der Dichte 1190 kg/m³, dem Kristallitschmelzpunkt von 181°C und einem MFI (190/2,16) von 1,3. Die übrigen Polymere sind identisch mit den in Vergleichsbeispiel 1 (a) beschriebenen.

### g. Vergleichsbeispiel 5:

Mehrschichtige, ungereckte Folie des Typs A / B / A / D / C mit dem Aufbau
**PA6 / (80%EVOH+20%PA6.12) / PA6 / K / PE**
15 / 15 / 15 / - / 75 µm

Die fünfschichtige Folie wurde wie in Vergleichsbeispiel 1 (a) beschrieben hergestellt. Die mittlere Polyamidschicht besteht aus einem Polymerblend aus einem Ethylenvinylalkohol EVOH mit einem Ethylengehalt von 32%, der Dichte 1190 kg/m³, dem Kristallitschmelzpunkt von 181°C und einem MFI (190/2,16) von 1,3, sowie aus einem Polyamid6.12 (PA6.12) der Dichte 1100 kg/m³ und dem Kristallitschmelzpunkt 198°C. Die übrigen Polymere sind identisch mit den in Vergleichsbeispiel 1 (a) beschriebenen.

Für die beschriebenen Folien a, b, c, d, e, f und g ist die Bewertung der Schichtenzusammensetzungen in Tabelle 1 zusammengefaßt. Es ist erkennbar, daß die Schichten A, C und D jeweils erfindungsgemäß ausgeführt wurden. Die Schicht B enthält in den Vergleichsbeispielen nicht erfindungsgemäße Zusammensetzungen.

**Tabelle 1**

| Schichtenzusammensetztung. | | | | | |
|---|---|---|---|---|---|
| | | **Schicht A** | **Schicht B** | **Schicht C** | **Schicht D** |
| a | Vergleich 1 | erfindungsgemäß | nicht erfindungsgemäß: 100% MXD6 | erfindungsgemäß | erfindungsgemäß |
| b | Beispiel 1 | erfindungsgemäß | erfindungsgemäß: 80% MXD6 + 20% PA6 | erfindungsgemäß | erfindungsgemäß |
| c | Beispiel 2 | erfindungsgemäß | erfindungsgemäß: 60% MXD6 + 40% PA6 | erfindungsgemäß | erfindungsgemäß |
| d | Vergleich 2 | erfindungsgemäß | nicht erfindungsgemäß: 100% aPA | erfindungsgemäß | erfindungsgemäß |
| e | Vergleich 3 | erfindungsgemäß | nicht erfindungsgemäß: 100% PA6 | erfindungsgemäß | erfindungsgemäß |
| f | Vergleich 4 | erfindungsgemäß | nicht erfindungsgemäß: 100% EVOH | erfindungsgemäß | erfindungsgemäß |
| g | Vergleich 5 | erfindungsgemäß | nicht erfindungsgemäß: 80% EVOH + 20% PA6.12 | erfindungsgemäß | erfindungsgemäß |

Aus Tabelle 2 ist erkennbar, daß alle Folien a bis g tiefziehbar und siegelbar sind. Ferner ist in dieser Tabelle die Die Sauerstoffdurchlässigkeit (OTR) aufgelistet. Als Aufgabe bestand eine Folie bereitzustellen, die eine geringe Sauerstoffdurchlässigkeit aufweist. Das bedeutet bei einer Foliendicke, wie sie hier vorliegt (s.o.), daß die Sauerstoffdurchlässigkeit OTR im trockenen (23 °C, 0 % r.F.) sowie im feuchten Zustand (23 °C, 90 % r.F.) einen Wert von OTR < 25 Ncm³/(m²*d*bar) aufweisen sollte. Diese Anforderung erfüllen neben den erfindungsgemäß hergestellten Folien b und c auch die Folien a, f und g. Zusätzlich war gefordert, daß die bereitzustellende Folie neben der beschriebenen Gasdichtigkeit auch die Eigenschaft aufweisen muß, nach der Sterilisation transparent zu bleiben. Dieses können die Folien a, f und g nicht erfüllen.

Zusammenfassend kann also festgestellt werden, daß bei den nicht erfindunggemäß hergestellten Folien immer nur eine Eigenschaft, nämlich entweder die Gasdichtigkeit oder die Transparenz nach der Sterilisation, erreichbar sind, bei den erfindungsgemäß hergestellten Folien jedoch beide Forderungen gleichzeitig erfüllt sind.

**Tabelle 2**

| Tiefziehbarkeit, Siegelbarkeit, Sauerstoffdurchlässigkeit (OTR) bei unterschiedlicher Feuchte und Transparenz nach der Sterilisation. | | | | | |
|---|---|---|---|---|---|
| | **tiefziehbar** | **siegelbar** | **OTR [Ncm**^{**3**}**/(m**^{**2**}***d*bar)] 23°C; 0% r.F.** | **OTR [Ncm**^{**3**}**/(m**^{**2**}***d*bar)] 23°C; 90% r.F.** | **transparent nach der Sterilisation (121°C/30 Min)** |
| a | ja | ja | 13,8 | 10,3 | nein |
| b | ja | ja | 13,3 | 12,1 | ja |
| c | ja | ja | 20,4 | 18,8 | ja |
| d | ja | ja | 30,5 | 21,3 | ja |
| e | ja | ja | 27,6 | 46,2 | ja |
| f | ja | ja | < 1 | nicht gemessen | nein |
| g | ja | ja | 1,3 | 6,1 | nein |

## Patentansprüche

1. Sterilisationsfeste Sperrschichtfolie auf Basis von Polyamiden und Polyolefinen, dadurch gekennzeichnet, daß die Folie aus
- mindestens einer Schicht aus aliphatischem Polyamid (A) und
- mindestens einer Schicht aus einem Polymerblend (B), welches aus 50-85 Gew-% aus Polyarylamid und 15-50 Gew-% aliphatischem Polyamid und
- mindestens einer thermoplastischen Siegelschicht (C) aus einem Polyolefin mit einem Kristallitschmelzpunkt von 121°C oder größer (C1) oder aus einem Polymerblend, enthaltend mindestens ein Polyolefin mit einem Kristallitschmelzpunkt von 121°C oder größer (C2) und
- mindestens einer Verbindungsschicht (D)
besteht, so angeordnet, daß eine Siegelschicht und eine Schicht aus aliphatischem Polyamid auf den Außenseiten der Folie liegen und daß die Folie ungereckt ist.

2. Folie nach Anspruch 1, dadurch gekennzeichnet, daß das aliphatische Polyamid Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, oder aus einer Mischung der genannten Polyamide besteht.

3. Folie nach einem der Aprüche 1 bis 2, dadurch gekennzeichnet, daß das Polyarylamid ein Polykondensat aus aromatischen Diaminen und Dicarbonäuren, vorzugsweise ein solches ist, das durch Polykondensation von m-Xylylendiamin und Adipinsäure hergestellt wurde.

4. Folie nach einem der Ansprüche 1 bis 3, dadurch gekennzeichnet, daß die thermoplastische Siegelschicht aus einem Polymer aus der Gruppe der Polyethylene, Copolymere der Polyethylene, Polypropylene, Copolymere der Polypropylene oder Polybutylene besteht oder ein Blend ist, enthaltend mindestens ein in diesem Anspruch genanntes Polymer.

5. Folie nach einem der Ansprüche 1 bis 4, dadurch gekennzeichnet, daß die thermoplastische Siegelschicht ein Polymerblend aus einem LinearLowDensityPolyethylen (LLDPE) und einem LowDensityPolyethylen (LDPE) oder ein Polymerblend aus einem Ethylen/Propylen-Copolymer und einem LinearLowDensityPolyethylen (LLDPE) ist.

6. Folie nach einem der Ansprüche 1 bis 5, dadurch gekennzeichnet, daß die Verbindungschichten aus einem Klebstoffsystem und/oder einem polymeren Haftvermittler bestehen.

7. Folie nach einem der Ansprüche 1 bis 6, dadurch gekennzeichnet, daß das Klebstoffsystem ein 2-Komponenten Polyurethan-Klebstoffsystem ist.

8. Folie nach einem der Ansprüche 1 bis 7, dadurch gekennzeichnet, daß der polymere Haftvermittler einen Kristallitschmelzpunkt von 121°C oder größer aufweist und ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend ist, enthaltend mindestens einen der in diesem Anspruch genannten Haftvermittler.

9. Folie nach einem der Ansprüche 1 bis 8, dadurch gekennzeichnet, daß der Haftvermittler ein anhydridmodifiziertes, vorzugsweise maleinsäureanhydrid-modifiziertes Polyethylen oder Polypropylen-Copolymer ist.

10. Folie nach einem der Ansprüche 1 bis 9, dadurch gekennzeichnet, daß mindestens eine Schicht mit Gleit- und/oder Antiblockmittel ausgerüstet ist.

11. Folie nach einem der Ansprüche 1 bis 10, dadurch gekennzeichnet, daß die Siegelschicht und/oder die Schicht aus aliphatischem Polyamid mit Gleit- und Antiblockmittel ausgerüstet sind.

12. Folie nach einem der Ansprüche 1 bis 11, dadurch gekennzeichnet, daß Gleitmittel ein Amidwachs ist.

13. Folie nach einem der Ansprüche 1 bis 12, dadurch gekennzeichnet, daß Antiblockmittel modifiziertes natürliches Kieselsäureprodukt ist.

14. Folie nach einem der Ansprüche 1 bis 13, dadurch gekennzeichnet, daß die Folie den Aufbau A / D / B / D / C oder A / B / A / D / C oder A / EVOH / B / D / C aufweist, wobei EVOH ein Ethylen/Vinylalkohol-Copolymeres ist und zwischen den Schichten D und C gegebenfalls Zwischenschichten enthalten sind.

15. Folie nach einem der Ansprüche 1 bis 14, dadurch gekennzeichnet, daß die Gesamtdicke der Folie 15 bis 400 µm beträgt.

16. Verwendung einer Folie gemäß einem der Ansprüche 1 bis 15 als Verpackungsfolie.

17. Verwendung einer Folie gemäß Anspruch 16 als Verpackungsfolie für Lebensmittel.
